# DEMANDE DE BREVET EUROPEEN

(11) **EP 1 495 985 A1**
(43) Date de publication de la demande: **12.01.2005**
(21) Numéro de dépôt: 04300423.3
(22) Date de dépôt: 02.07.2004
(51) Int. Cl.: B65D 35/02, B65D 65/40

(54) **Récipient, notamment tube souple, comportant un revêtement fibreux et procédé de fabrication**

(30) Priorité: 03.07.2003 FR 0308094
(71) Demandeur: L'OREAL, 75008 Paris (FR)
(72) Inventeur: RAMET, Marc, 92600 ASNIERES (FR)
(74) Mandataire: Tanty, François

(57) **Abrégé**

La présente invention concerne un récipient ( 1 ), comportant un corps tubulaire (2) formé par une feuille comprenant au moins une première couche en matière plastique et une deuxième couche, extérieure, fibreuse, ladite feuille étant assemblée le long d'au moins deux de ses bords.

## Description

La présente invention concerne les récipients destinés entre autres au conditionnement de produits fluides, notamment pulvérulents, liquides ou gélifiés, et les procédés de fabrication de ces récipients.

Les demandes de brevet européen EP 1 281 333 A2 et EP 1 275 321 A1 décrivent des articles cosmétiques revêtus extérieurement d'un tissu. Dans la demande EP 1 275 321 A1, le tissu est extensible, ce qui limite le choix des matériaux susceptibles d'être employés.

Il existe un besoin pour améliorer l'esthétique des récipients, notamment des tubes souples utilisés pour le conditionnement des produits cosmétiques, sans pour autant compliquer outre mesure leur fabrication.

La présente invention a ainsi pour objet, selon l'un de ses aspects, un récipient comportant :
- un corps tubulaire formé d'une feuille comprenant au moins une première couche en matière plastique et une deuxième couche, extérieure, fibreuse, ladite feuille étant assemblée le long d'au moins deux de ses bords.

L'expression « assemblée le long d'au moins deux de ses bords » ne doit pas se comprendre de manière limitative et englobe le cas où les bords longitudinaux de la feuille sont jointifs sans se recouvrir et le cas où ils se recouvrent.

La deuxième couche, extérieure, permet de conférer au récipient un aspect attractif tandis que la première couche permet de conditionner de manière étanche le produit à l'intérieur du récipient.

Dans un exemple de mise en oeuvre de l'invention, le récipient comporte un organe de distribution fixé à une première extrémité du corps tubulaire. Le corps tubulaire peut être fermé, à une deuxième extrémité opposée à la première, par soudure de la feuille sur elle-même, ce qui permet de conférer au récipient une forme générale s'aplatissant et s'élargissant en éloignement de la première extrémité, similaire à celle des tubes souples conventionnels.

L'organe de distribution est avantageusement réalisé en matière plastique, notamment par injection. L'organe de distribution peut être réalisé, par exemple, avec un embout fileté sur lequel peut venir se visser un bouchon. L'organe de distribution peut être injecté au contact du corps tubulaire, de manière à s'assembler avec celui-ci.

La première couche en matière plastique peut avoir été assemblée avec la couche extérieure fibreuse par passage entre des rouleaux.

La couche extérieure peut comporter un tissu, un feutre, un flocage, un non-tissé, une fourrure animale ou une imitation de fourrure, ou encore un papier.

Le récipient peut être rempli d'un produit cosmétique, y compris de soin.

L'invention a encore pour objet, selon un autre de ses aspects, un récipient comportant un corps tubulaire réalisé par la mise en forme d'une feuille souple, cette feuille comprenant au moins une première couche en matière plastique et une deuxième couche, extérieure, fibreuse.

L'invention a encore pour objet, selon un autre de ses aspects, un kit comportant :
- un récipient tel que défini plus haut,
- un objet choisi dans la liste suivante : objets personnels, notamment sac à main, sac à dos, parapluie, portefeuille, porte-stylo, lunettes, vanity-case, valise, vêtement, sous-vêtement, mallette, chapeau, casquette, chaussure, éléments de mobilier ou de décoration, notamment siège, canapé, rideau, tenture murale,
cet objet comportant un tissu ou autre revêtement fibreux, la couche fibreuse étant constituée par le même tissu ou revêtement que l'objet.

L'invention a encore pour objet, selon un autre de ses aspects, un procédé de fabrication d'un récipient, notamment d'un tube souple, comportant l'étape suivante :
- former un tube à partir d'une feuille comportant au moins une couche de matière plastique et une deuxième couche, extérieure, fibreuse.

Le procédé peut en outre comporter l'une au moins des étapes suivantes :
- assembler deux bords opposés de la feuille le long d'une ligne longitudinale du tube,
- découper un tronçon de tube et fixer à une extrémité de ce tronçon un organe de distribution, ou fixer à une extrémité du tube l'organe de distribution et découper ensuite le tronçon de tube, et
- fermer une deuxième extrémité du tronçon de tube, opposée à la première, par pincement du tronçon et soudure le long d'une ligne transversale.

L'organe de distribution peut être réalisé par injection de matière plastique au contact du tube ou tronçon de tube.

L'invention pourra être mieux comprise à la lecture de la description détaillée qui va suivre, d'un exemple de mise en oeuvre non limitatif de celle-ci, et à l'examen du dessin annexé, sur lequel :
- la figure 1 représente de manière schématique, en perspective, un exemple de tube souple réalisé conformément à l'invention,
- la figure 2 est une section transversale selon II-II de la figure 1,
- la figure 3 illustre la formation d'un tube à partir d'une feuille et la découpe d'un tronçon de tube destiné à former le corps tubulaire du récipient,
- la figure 4 représente isolément le tronçon de tube, après assemblage avec un organe de distribution, et
- la figure 5 représente de manière schématique un kit comportant un récipient réalisé conformément à l'invention.

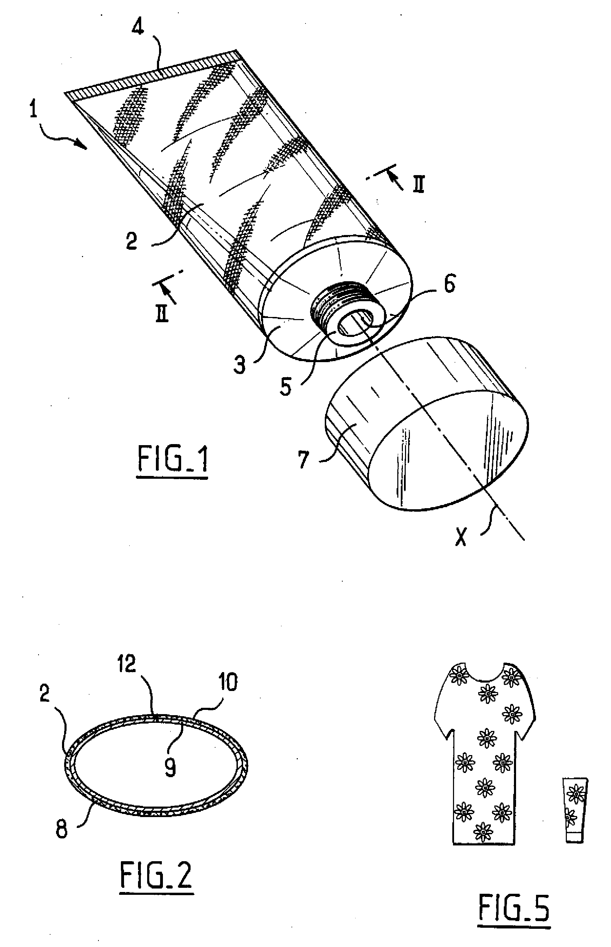

Le tube 1 représenté à la figure 1 comporte un corps tubulaire 2 allongé selon un axe longitudinal X, muni à une première extrémité axiale d'un organe de distribution 3. Le corps tubulaire 2 est fermé à une deuxième extrémité axiale, opposée à la première, selon une ligne de fermeture 4 s'étendant sensiblement perpendiculairement à l'axe X.

L'organe de distribution 3 comporte un embout fileté 5, définissant un orifice de distribution 6 qui peut être obturé de manière étanche par un bouchon 7 agencé pour se visser sur l'embout 5. L'organe de distribution 3 est par exemple réalisé par injection de matière plastique.

Le corps 2 est formé d'une feuille souple comportant une couche intérieure 9 de matière plastique et une couche extérieure 10 présentant une texture particulière, ces deux couches 9 et 10 étant assemblées par exemple par pression, notamment à chaud et/ou avec utilisation d'une colle. La pression d'assemblage peut résulter du passage entre des rouleaux par exemple.

Le tube 1 peut être réalisé de la manière suivante.

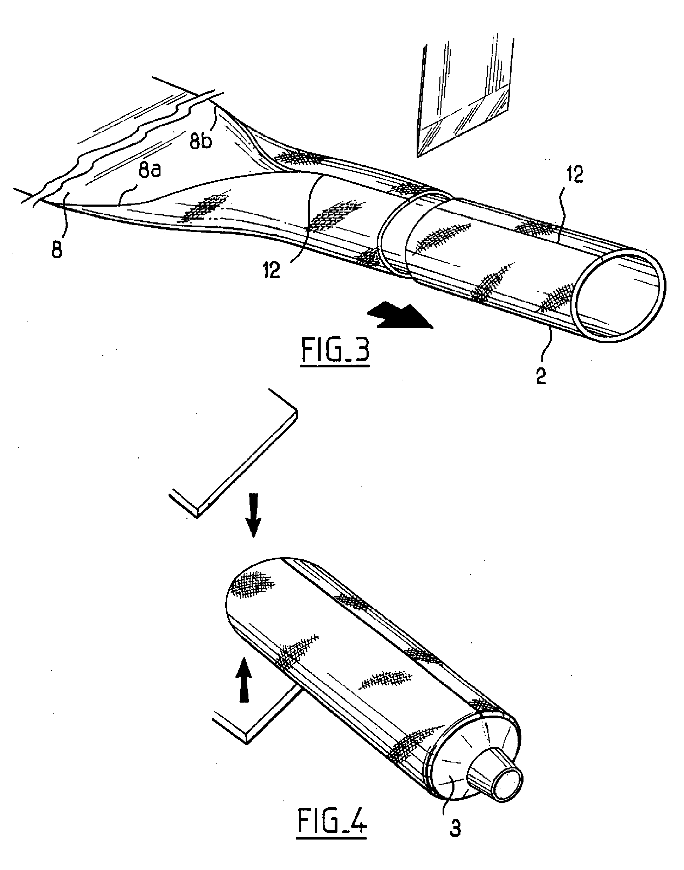

La feuille 8 est conformée en tube, comme illustré à la figure 3. Durant la formation de ce tube, deux bords longitudinaux opposés 8a et 8b de la feuille 8 sont assemblés par soudure grâce à la couche 9 de matière plastique, le long d'une ligne d'assemblage 12.

Ensuite, le tube est découpé en tronçons destinés à former chacun le corps tubulaire 2 d'un récipient 1, au moyen d'un outil de coupe représenté schématiquement à la figure 3. Des tronçons de tube sont placés sur un carrousel et des organes de distribution 3 correspondants sont réalisés par injection de matière plastique à une extrémité des tronçons. La matière injectée se soude par fusion locale de matière avec la couche 9 en matière plastique de la feuille 8.

Chaque tronçon de tube est rempli, après mise en place du bouchon 7, par l'extrémité ouverte, opposée à l'organe de distribution 3.

Le corps tubulaire 2 est fermé à l'extrémité opposée à l'organe de distribution 3 en pinçant celle-ci à chaud au moyen d'une mâchoire représentée de façon schématique, avec soudure de la couche intérieure 9 en matière plastique sur elle-même le long de la ligne de fermeture 4, comme illustré à la figure 4.

Le prélèvement du produit contenu dans le récipient 1 peut s'effectuer par exemple en pressant sur deux faces opposées du tube. Ce dernier peut reprendre, le cas échéant, sa forme initiale grâce à une mémoire de forme due à l'absence de déformation permanente de la feuille 8.

La couche 10 peut être constituée par un matériau fibreux, notamment un textile. Ce dernier peut être obtenu par tissage ou tricotage. Le textile peut comporter des fils naturels ou synthétiques, notamment des fils de coton ou autres matières végétales. Le tissu peut encore comporter des fils de polyester ou de polyamide, ou métalliques.

Le matériau fibreux peut encore être un feutre, un non-tissé, une fourrure animale ou une imitation de fourrure animale.

Le matériau fibreux peut encore être un revêtement de flocage.

La couche extérieure 10 peut comporter une impression ou avoir subi un traitement de surface.

La couche 9 peut être dépourvue de fibres et être constituée par un film en une matière thermoplastique, par exemple une polyoléfine, notamment du PE ou PP. L'épaisseur de la couche intérieure 9 est par exemple comprise entre 0,1 mm et 1 mm, par exemple de l'ordre de 0,3 mm à 0,6 mm.

La feuille 8 peut comporter plus de deux couches, et notamment une ou plusieurs couches supplémentaires intérieures ou extérieures à la couche 9, destinées à former des barrières vis-à-vis de certains constituants volatils du produit contenu dans le récipient ou vis-à-vis de l'oxygène de l'air.

Le cas échéant, la feuille 8 peut incorporer une couche métallique, par exemple d'aluminium, laquelle peut être revêtue sur ses deux faces opposées d'une couche de matière plastique.

Un récipient réalisé conformément à l'invention peut être associé à un objet, par exemple un vêtement, le tissu dans lequel le vêtement est réalisé étant alors le même que celui constituant la couche extérieure 10, comme illustré à la figure 5.

Bien entendu, l'invention n'est pas limitée à l'exemple de réalisation qui vient d'être donné.

En particulier, le récipient peut comporter un corps tubulaire qui est fermé à l'extrémité opposée à l'organe de distribution non pas par pincement mais par exemple au moyen d'un fond rapporté, ce fond étant par exemple soudé à sa périphérie au corps tubulaire ou mobile au cours du vidage du récipient.

De même, l'organe de distribution 3 peut ne pas comporter d'embout fileté, afin par exemple de permettre le prélèvement du produit contenu dans le corps du récipient au moyen d'un applicateur introduit à travers une ouverture de l'organe de distribution, ce dernier étant par exemple réduit à une pièce annulaire permettant la fixation d'un couvercle. L'organe de distribution peut encore être agencé pour permettre la fixation d'une pompe ou d'une valve ou intégrer une telle pompe ou valve.

La feuille 8 peut éventuellement être pliée ou cintrée de manière à conférer au corps du récipient diverses sections, notamment ronde, ovale, elliptique, polygonale, par exemple triangulaire ou carrée.

Dans toute la description, y compris les revendications, l'expression « comportant un » doit être comprise comme étant synonyme de « comportant au moins un », sauf si le contraire est spécifié.

## Revendications

1. Récipient (1), comportant un corps tubulaire (2) formé par une feuille (8) comprenant au moins une première couche (9) en matière plastique et une deuxième couche (10), extérieure, fibreuse, ladite feuille étant assemblée le long d'au moins deux de ses bords.

2. Récipient selon la revendication 1, **caractérisé par le fait qu'**il comporte un organe de distribution (3) fixé à une première extrémité du corps tubulaire (2).

3. Récipient selon la revendication 2, **caractérisé par le fait que** le corps tubulaire est fermé à une deuxième extrémité, opposée à la première, par soudure de la feuille (8) sur elle-même.

4. Récipient selon l'une des revendications 2 et 3, **caractérisé par le fait que** l'organe de distribution (3) est réalisé en matière plastique.

5. Récipient selon l'une quelconque des revendications 2 à 4, **caractérisé par le fait que** l'organe de distribution (3) est réalisé avec un embout fileté (5).

6. Récipient selon l'une quelconque des revendications 1 à 4, **caractérisé par le fait que** la couche (9) de matière plastique a été assemblée par pression et éventuellement à chaud et/ou en utilisant une colle avec la couche (10) fibreuse.

7. Récipient selon l'une quelconque des revendications précédentes, **caractérisé par le fait que** la deuxième couche (10) comporte un matériau fibreux.

8. Récipient selon la revendication 7, **caractérisé par le fait que** le matériau fibreux comporte un tissu.

9. Récipient selon la revendication 7, **caractérisé par le fait que** le matériau fibreux comporte un non-tissé, un feutre, une fourrure animale ou une imitation de fourrure, un flocage ou un papier.

10. Kit, comportant :
- un récipient (1) tel que défmi dans l'une quelconque des revendications précédentes,
- un objet choisi dans la liste suivante : objets personnels, notamment sac à main, sac à dos, parapluie, portefeuille, porte-stylo, lunettes, vanity-case, vêtement, sous-vêtement, valise, mallette, chapeau, casquette ou chaussure, éléments de mobilier ou de décoration, notamment siège, canapé, rideau ou tenture murale, cet objet comportant un tissu ou autre revêtement, la couche (10) fibreuse étant constituée par le même tissu ou revêtement.

11. Procédé de fabrication d'un récipient, notamment d'un tube, comportant l'étape suivante :
- former un tube à partir d'une feuille (8) comportant au moins une première couche (9) de matière plastique et une deuxième couche (10) fibreuse, cette deuxième couche (10) étant extérieure au tube.

12. Procédé selon la revendication 11, **caractérisé par le fait qu'**il comporte en outre l'étape consistant à :
- assembler deux bords opposés (8a, 8b) de la feuille le long d'une ligne longitudinale (12) du tube.

13. Procédé selon l'une des revendications 11 et 12, **caractérisé par le fait qu'**il comporte en outre l'étape consistant à :
- découper un tronçon de tube et fixer à une extrémité de ce tronçon un organe de distribution (3), ou fixer à une extrémité du tube l'organe de distribution et découper ensuite le tronçon de tube.

14. Procédé selon la revendication 13, **caractérisé par le fait qu'**il comporte en outre l'étape consistant à :
- fermer la deuxième extrémité du tronçon de tube opposée à la première par pincement du tronçon du tube et soudure le long d'une ligne de fermeture (4) transversale.

15. Procédé selon l'une quelconque des revendications 11 à 14, **caractérisé par le fait que** la feuille est formée par l'assemblage par pression, et éventuellement à chaud et/ou avec une colle, d'une couche fibreuse avec au moins un film de matière thermoplastique.
